# EUROPÄISCHE PATENTSCHRIFT

(11) **EP 3 818 799 B1**
(45) Veröffentlichungstag und Bekanntmachung des Hinweises auf die Patenterteilung: **09.07.2025**
(21) Anmeldenummer: 20194771.0
(22) Anmeldetag: 07.09.2020
(51) Int. Cl.: A01B 69/00

(54) **LANDWIRTSCHAFTLICHE ARBEITSMASCHINE**
AGRICULTURAL MACHINE
MACHINE DE TRAVAIL AGRICOLE

(30) Priorität: 08.11.2019 DE 102019130155
(43) Veröffentlichungstag der Anmeldung: 12.05.2021
(73) Patentinhaber: CLAAS E-Systems GmbH, 49201 Dissen (DE)
(72) Erfinder: Laysgaard Andersen, Gert, 3450 Alleroed (DK); Jensen, Martin Falk, 2500 Valby (DK); Burchardi, Henrik, 3230 Graested (DK); Jürschik, Peter, 33335 Gütersloh (DE); Künnen, Tobias, 49477 Ibbenbüren (DE); Hagedorn, Simon, 49219 Glandorf (DE)
(74) Vertreter: CLAAS Gruppe

(56) Entgegenhaltungen:
- EP-A1- 2 910 098
- EP-A1- 3 417 686
- EP-A2- 2 517 543

## Beschreibung

Die vorliegende Erfindung betrifft eine landwirtschaftliche Arbeitsmaschine.

Der bekannte Stand der Technik (DE 10 2017 113 726 A1), von dem die Erfindung ausgeht, betrifft eine landwirtschaftliche Arbeitsmaschine gemäß dem Oberbegriff von Anspruch 1.

Der bekannte Stand der Technik EP 2 910 098 A1 beschreibt auch eine landwirtschaftliche Arbeitsmaschine mit einer Bildverarbeitungseinheit die dazu eingerichtet ist, in den erzeugten Bildern Bildbereiche, die bei der Bildverarbeitung unberücksichtigt bleiben sollen, auszublenden. Diese Druckschrift beschreibt aber nicht, dass basierend auf den generierten Informationen über die Breite der Pflanzenreihen bzw. der Bodenabschnitte die Querposition des landwirtschaftlichen Arbeitsaggregats anzupassen ist.

Der Begriff "landwirtschaftliche Arbeitsmaschine" ist vorliegend weit zu verstehen. Darunter fällt jegliche Kombination einer Zugmaschine mit einem daran angehängten oder angebauten landwirtschaftlichen Arbeitsaggregat. Eine solche Zugmaschine ist insbesondere ein Traktor, kann grundsätzlich aber auch eine Erntemaschine wie ein Mähdrescher oder Feldhäcksler sein.

Im Rahmen der zunehmenden Automatisierung landwirtschaftlicher Arbeitsmaschinen werden diese inzwischen häufig mit Kameraanordnungen und anderen Sensoranordnungen ausgestattet, um den Bediener beim Fahren und bei der Verrichtung landwirtschaftlicher Arbeit zu unterstützen. Insbesondere können landwirtschaftliche Arbeitsaggregate der landwirtschaftlichen Arbeitsmaschine, d. h. Komponenten und Geräte, insbesondere Anbaugeräte, die zur Verrichtung oder Unterstützung landwirtschaftlicher Arbeit dienen, auf diese Weise überwacht und gesteuert werden.

Es ist dabei eine Herausforderung, aus den mittels der Kamera erzeugten Bildern möglichst präzise Informationen über die Lage von Pflanzenreihen und/oder von zu bearbeitenden Bodenabschnitten wie Furchen oder dergleichen zu generieren. So wird beispielsweise bei einer Bodenbearbeitung mittels einer von der Zugmaschine gezogenen mechanischen Hacke als landwirtschaftliches Arbeitsaggregat regelmäßig die Querposition, also die Position quer zur Fahrtrichtung, des landwirtschaftlichen Arbeitsaggregats, genauer dessen Verschieberahmens, basierend auf den generierten Lageinformationen angepasst. Regelmäßig erfasst die Kamera dabei auch Teile des Traktors und/oder des landwirtschaftlichen Arbeitsaggregats, was zu einer fehlerhaften Ausführung der Bilderkennungsalgorithmen führen kann. Die Folge sind fehlerhafte Einstellungen der Querposition des landwirtschaftlichen Arbeitsaggregats und dadurch eine verminderte Qualität bei der Bearbeitung des Feldbestands. Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des Anspruchs 1 gelöst.

Besonders bevorzugte Ausgestaltungen sind Gegenstand der Unteransprüche. Wesentlich ist die grundsätzliche Überlegung, bestimmte Bildbereiche in den von der jeweiligen Kamera erzeugten Bildern auszublenden, die zu Fehlern bei der Durchführung der Bilderkennungsalgorithmen führen könnten. Indem solche Bildbereiche ausgeblendet werden, stehen für die Durchführung der anschließenden Bildverarbeitung, also für die Durchführung der Bilderkennungsalgorithmen, optimierte Bildbereiche zur Verfügung, die beispielsweise nur den Boden und die Pflanzen beinhalten, aber keine Maschinenteile.

Im Einzelnen wird vorgeschlagen, dass die Bildverarbeitungseinheit eingerichtet ist, in den erzeugten Bildern Bildbereiche, die bei der Bildverarbeitung unberücksichtigt bleiben sollen, dynamisch und/oder statisch auszublenden.

Im Folgenden wird die Erfindung anhand einer lediglich Ausführungsbeispiele darstellenden Zeichnung näher erläutert. In der Zeichnung zeigt
- Fig. 1: eine schematische Draufsicht einer landwirtschaftlichen Arbeitsmaschine und

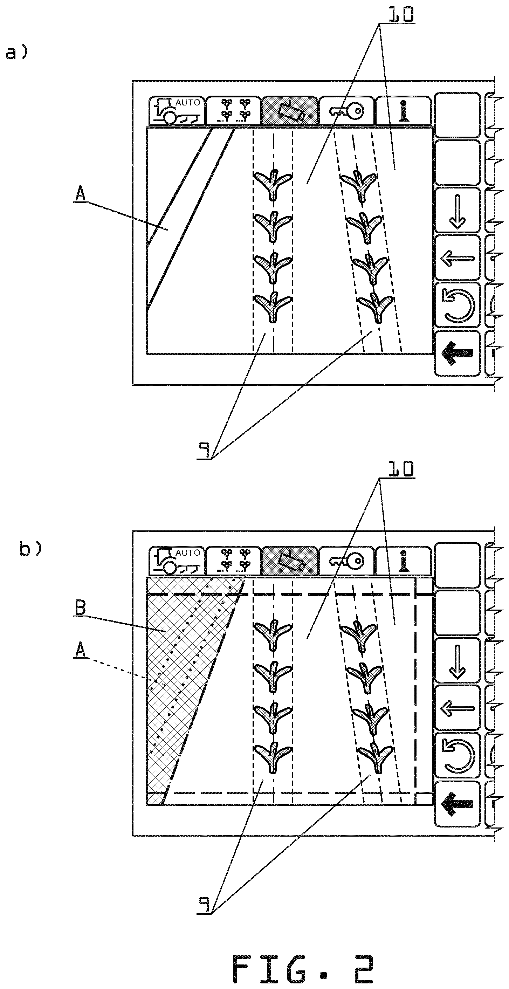

- Fig. 2: ein mittels einer Kamera erzeugtes Bild a) ohne eine Bildmaske und b) mit einer Bildmaske.

Die vorschlagsgemäße Lösung lässt sich auf einen weiten Bereich landwirtschaftlicher Arbeitsmaschinen, insbesondere selbstfahrender landwirtschaftlicher Arbeitsmaschinen, anwenden. Eine solche landwirtschaftliche Arbeitsmaschine weist eine Zugmaschine 1 und mindestens ein landwirtschaftliches Arbeitsaggregat 2, insbesondere in Form eines Anbaugeräts, beispielsweise zur Bodenbearbeitung, auf. Das landwirtschaftliche Arbeitsaggregat 2 dient ganz allgemein zur Bearbeitung eines Feldbestands umfassend eine Vielzahl von Nutzpflanzen. Die Zugmaschine 1 ist bei dem hier dargestellten Ausführungsbeispiel als Traktor 3 ausgestaltet. Hinsichtlich anderer denkbarer Zugmaschinen sei auf die Aufzählung im einleitenden Teil der Beschreibung verwiesen. Die Ausführungen zu einem Traktor 3 gelten für alle anderen Arten von Zugmaschinen 1 entsprechend.

Die Zugmaschine 1 und das mindestens eine landwirtschaftliche Arbeitsaggregat 2 werden von einem Bediener, dem Fahrer, bedient, wobei als Bedienerunterstützung allgemein ein Fahrerassistenzsystem 4 vorgesehen ist, welches beispielsweise die Geschwindigkeit und/oder den Lenkwinkel der Zugmaschine 1 und/oder die Querposition und/oder die Arbeitshöhe des landwirtschaftlichen Arbeitsaggregats 2, insbesondere vollautomatisch, regeln kann. Die Regelung von Zugmaschine 1 und/oder landwirtschaftlichem Arbeitsaggregat 2 ermöglicht eine besonders präzise Bearbeitung eines Feldbestands umfassend eine Vielzahl von Nutzpflanzen.

Weiter weist die landwirtschaftliche Arbeitsmaschine, insbesondere als Teil des Fahrerassistenzsystems 4, eine Regelungseinrichtung 5 auf, die eine Kameraanordnung 6 und eine Bildverarbeitungseinheit 7 aufweist.

Die Kameraanordnung 6 ist mit mindestens einer Kamera 8, hier und vorzugsweise einer 3D-Kamera, ausgestattet. Die Kameraanordnung 6 erzeugt mittels der Kamera 8 Bilder von dem Feldbestand, insbesondere vor, neben und/oder hinter der Zugmaschine 1 und/oder dem landwirtschaftlichen Arbeitsaggregat 2. Die Kamera 8 ist auf dem landwirtschaftlichen Arbeitsaggregat 2, insbesondere auf einem in Querrichtung verlagerbaren Bauteil, hier dem Verschieberahmen einer mechanischen Hacke, montiert.

Die Bildverarbeitungseinheit 7 führt dann eine Bildverarbeitung durch, bei der sie basierend auf den erzeugten Bildern Lageinformationen über die Lage von Pflanzenreihen 9 und/oder von zu bearbeitenden Bodenabschnitten 10 generiert. Basierend auf diesen generierten Lageinformationen passt dann die Regelungseinrichtung 5 die Querposition des landwirtschaftlichen Arbeitsaggregats 2 an.

Das in den Figuren dargestellte und insoweit bevorzugte Ausführungsbeispiel betrifft eine landwirtschaftliche Arbeitsmaschine mit einer Zugmaschine 1, insbesondere einem Traktor 3, mit mindestens einem landwirtschaftlichen Arbeitsaggregat 2 zur Bearbeitung eines Feldbestands umfassend eine Vielzahl von Nutzpflanzen, und mit einer Regelungseinrichtung 5, wobei die Regelungseinrichtung 5 eine Kameraanordnung 6 mit mindestens einer Kamera 8, insbesondere 3D-Kamera, aufweist, die mittels der Kamera 8 Bilder von dem Feldbestand erzeugt, wobei die Regelungseinrichtung 5 eine Bildverarbeitungseinheit 7 aufweist, die durch eine Bildverarbeitung basierend auf den erzeugten Bildern Lageinformationen über die Lage von Pflanzenreihen 9 und/oder zu bearbeitenden Bodenabschnitten 10 generiert, wobei die Regelungseinrichtung 5 basierend auf den generierten Lageinformationen die Querposition des landwirtschaftlichen Arbeitsaggregats 2 anpasst.

Die Lageinformationen umfassen dabei Informationen über die Breite der Pflanzenreihen 9 bzw. Bodenabschnitte 10.

Bei der Kamera 8 handelt es sich insbesondere um eine 3D-Kamera, durch die neben Höheninformationen und Breiteninformationen also auch Tiefeninformationen generiert werden können.

Wesentlich ist nun, dass die Bildverarbeitungseinheit 7 eingerichtet ist, in den erzeugten Bildern Bildbereiche A, die bei der Bildverarbeitung unberücksichtigt bleiben sollen, dynamisch und/oder statisch auszublenden.

Mit "dynamisch und/oder statisch" ist gemeint, dass die Bildverarbeitungseinheit 7 Bildbereiche A entweder sowohl dynamisch als auch statisch oder nur dynamisch oder nur statisch ausblenden kann. Ein dynamisches Ausblenden ist hier bevorzugt. Der Begriff "dynamisch ausblenden" bedeutet, dass die Bildverarbeitungseinheit in der Lage ist, die besagten Bildbereiche A, die unberücksichtigt bleiben sollen, für jedes mit der Kamera 8 erzeugte Bild neu festzulegen. So kann sich während der Bearbeitung des Feldbestands die Position und/oder Neigung der Kamera 8 relativ zur Zugmaschine 1 und/oder relativ zu den Pflanzenreihen 9 bzw. Bodenabschnitten 10 ändern, wodurch in einem daraufhin erzeugten Bild die Bildbereiche A, die unberücksichtigt bleiben sollen, innerhalb des Bildes an einer anderen Stelle und/oder in einer anderen Größe vorgesehen sein können. Die Bildverarbeitungseinheit 7 ist nun in der Lage, auf eine Veränderung dieser Bildbereiche A, die unberücksichtigt bleiben sollen, zu reagieren und diese auch in dem jeweils neuen von der Kamera 8 erzeugten Bild auszublenden.

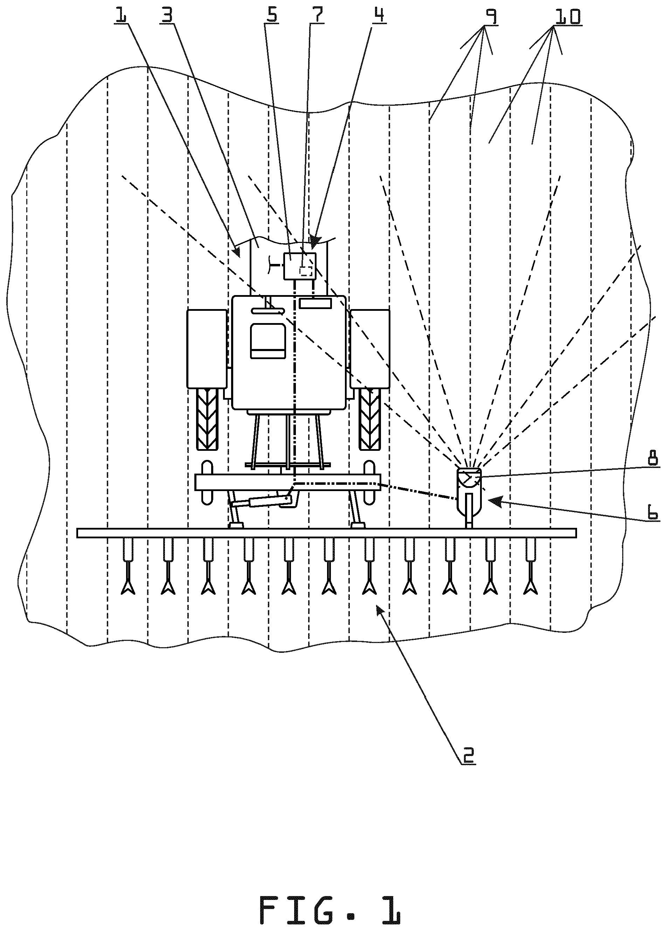

Es sind auch Anwendungsfälle denkbar, bei denen ein statisches Ausblenden ausreichend ist. So kann die Kamera wie in Fig. 1 an einer der Seiten des landwirtschaftlichen Arbeitsaggregats 2, aber grundsätzlich auch mittig am landwirtschaftlichen Arbeitsaggregat 2 angeordnet sein. Bei einer mittigen Anordnung verändern sich die Bildbereiche, die bei der Bildverarbeitung unberücksichtigt bleiben sollen, bei einer Positionsänderung der Kamera gegebenenfalls nur sehr wenig in ihrer Lage und Größe, so dass in diesem Fall auch ein statisches Ausblenden ausreicht. Die besagten Bildbereiche A, die unberücksichtigt bleiben sollen, sind dann in jedem mit der Kamera 8 erzeugten Bild identisch.

Änderungen der Position und/oder Neigung der Kamera 8 relativ zur Zugmaschine 1 und/oder relativ zu den Pflanzenreihen 9 bzw. Bodenabschnitten 10 ergeben sich beispielsweise aufgrund einer Querverstellung, also Verstellung quer zur Fahrtrichtung, des landwirtschaftlichen Arbeitsaggregats 2, jedenfalls eines die Kamera 8 tragenden Bauteils des landwirtschaftlichen Arbeitsaggregats 2. Eine solche Querverstellung wird dann, insbesondere automatisch, durchgeführt, wenn die Bildverarbeitungseinheit 7 Änderungen in den Lageinformationen erkennt. Beispielsweise kann sich der Verlauf von Pflanzenreihen 9 bzw. Bodenabschnitten 10 ändern oder die Zugmaschine 1 weicht unbeabsichtigt von ihrer optimalen Fahrspur ab, wodurch sich der Abstand quer zur Fahrtrichtung zwischen der Zugmaschine 1 und den Pflanzenreihen 9 bzw. Bodenabschnitten 10 ändert. Um dies zu kompensieren, regelt die Regelungseinrichtung 5 die Querposition des landwirtschaftlichen Arbeitsaggregats 2 nach. Weiterhin ist es denkbar, dass das landwirtschaftliche Arbeitsaggregat 2 Aufwärtsbewegungen und/oder Bewegungen in Fahrtrichtung und/oder Schwenkbewegungen durchführt, beispielsweise bei einer Änderung der Arbeitstiefe des landwirtschaftlichen Arbeitsaggregats 2 und/oder bei Unebenheiten des Bodens. Auch ist es denkbar, dass die Position und/oder Neigung der Kamera 8 aufgrund einer Neumontage geändert wird.

Bei dem in den Figuren dargestellten und insoweit bevorzugten Ausführungsbeispiel ist ferner vorgesehen, dass die Bildverarbeitungseinheit 7 als einen Bildbereich A, der bei der Bildverarbeitung unberücksichtigt bleiben soll, einen einen Teil der Zugmaschine 1 abbildenden Bildbereich A und/oder einen einen Teil des landwirtschaftlichen Arbeitsaggregats 2 abbildenden Bildbereich A und/oder einen ein bodenfestes Objekt abbildenden Bildbereich A ausblendet.

Teile der Zugmaschine, die bei der Bildverarbeitung durch die Bildverarbeitungseinheit 7 nicht mit berücksichtigt werden sollen, da sie ansonsten die Durchführung der Bilderkennungsalgorithmen stören würden, sind beispielsweise Räder, Kotflügel oder dergleichen der Zugmaschine 1. Ähnlich verhält es sich mit dem landwirtschaftlichen Arbeitsaggregat 2, von dem ebenfalls Teile in das von der Kamera 8 erzeugte Bild ragen können, die unberücksichtigt bleiben sollen, beispielsweise Teile der Koppeleinrichtung. Bodenfeste Objekte, die nicht berücksichtigt werden sollen, sind beispielsweise Zäune, Bäume oder dergleichen.

Weiter ist hier und vorzugsweise vorgesehen, dass die Bildverarbeitungseinheit 7 zum Ausblenden des jeweiligen Bildbereichs A, der bei der Bildverarbeitung unberücksichtigt bleiben soll, eine Bildmaske B im jeweiligen Bild erzeugt, die den Bildbereich A abdeckt, vorzugsweise, dass die Bildmaske B eine zweidimensionale Maske, die eine Fläche im Bild abdeckt, oder eine dreidimensionale Maske, die ein Volumen im Bild abdeckt, ist, weiter vorzugsweise, dass die Bildmaske B von Polygonen und/oder Pixeln gebildet wird.

Mit einer Bildmaske B ist ein grafisches Element gemeint, das Teile des von der Kamera 8 erzeugten Bildes abdeckt. Ein solchermaßen abgedeckter Bildbereich wird von der Bildverarbeitungseinheit 7 dann als Bereich erkannt, der bei der folgenden Bildverarbeitung unberücksichtigt bleiben soll. Die Bildmaske B kann dabei zweidimensional sein, sich also als ebene Fläche über einen Bildbereich A legen. Die Bildmaske B kann aber auch dreidimensional sein und einen entsprechenden Bildbereich A dreidimensional umschließen. Für letzteres ist es besonders vorteilhaft, wenn die Kamera 8 auch dreidimensionale Bildinformationen erzeugt.

Eine solche Bildmaske B kann beispielsweise bei der Erstinbetriebnahme, insbesondere vor Beginn eines landwirtschaftlichen Arbeitsauftrags, vom Bediener manuell in einem von der Kamera 8 erzeugten Bild eingestellt bzw. platziert werden. Treten besagte Änderungen in der Position und/oder Neigung der Kamera 8 auf, wodurch sich auch die Bildbereiche A, die bei der Bildverarbeitung unberücksichtigt bleiben sollen, in ihrer Lage und/oder Größe ändern können, wird die Bildmaske B entsprechend dynamisch angepasst. Die Bildmaske B deckt also weiterhin den Bildbereich A, der bei der Bildverarbeitung unberücksichtigt bleiben soll, ab.

Darüber hinaus ist hier und vorzugsweise vorgesehen, dass der jeweilige von der Bildmaske B abgedeckte Bereich durch Bildkoordinaten in dem jeweiligen Bild definiert ist, dass die Bildverarbeitungseinheit 7 die Bildkoordinaten der jeweiligen Bildmaske B basierend auf der in der Regelungseinrichtung 5 abgelegten und/oder von der Regelungseinrichtung 5 berechneten Position und/oder Neigung der Kamera 8 relativ zur Zugmaschine 1 in Weltkoordinaten umwandelt, dass die Bildverarbeitungseinheit 7 dann, nach einer Änderung der Position und/oder Neigung der Kamera 8 relativ zur Zugmaschine 1 gegenüber der vorhergehenden Position und/oder Neigung der Kamera 8, die Weltkoordinaten entsprechend anpasst und dass die Bildverarbeitungseinheit 7 die angepassten Weltkoordinaten in neue Bildkoordinaten umwandelt und in dem von der Kamera 8 in ihrer neuen Position und/oder Neigung erzeugten neuen Bild der von der Bildmaske B abgedeckte Bereich den neuen Bildkoordinaten entsprechend abgedeckt wird.

Die Position der Kamera 8 relativ zur Zugmaschine 1 ergibt sich insbesondere aus ihrem Abstand zur Zugmaschine 1 in Fahrtrichtung, ihrem Abstand zur Zugmaschine 1 quer zur Fahrtrichtung und ihrem Abstand zur Zugmaschine 1 bzw. zum Boden in vertikaler Richtung. Die genannten Abstände sind dabei vorzugsweise zu ein und demselben Bezugspunkt an der Zugmaschine 1 definiert. Dabei sind der Regelungseinrichtung 5 die Abstände und/oder die Kameraneigung in einer bestimmten Ausgangsstellung des landwirtschaftlichen Arbeitsaggregats 2 relativ zur Zugmaschine 1 bekannt. Wird dann das landwirtschaftliche Arbeitsaggregat 2 von der Regelungseinrichtung 5 in Querrichtung, Höhenrichtung, Längsrichtung und/oder um mindestens eine Schwenkachse verstellt, kann die Regelungseinrichtung 5 anhand der Stellwege in Querrichtung, Höhenrichtung, Längsrichtung und/oder um die Schwenkachse(n) die neue Position der Kamera 8 bestimmen.

Bildkoordinaten sind Koordinaten in einem Koordinatensystem, das kartesische Koordinatenachsen hat, die sich auf das von der Kamera erzeugte Bild beziehen, also zum erzeugten Bild fest fixiert sind. Dieses Bild-Koordinatensystem hat als Ausgangspunkt genau einen Bezugspunkt im Bild, beispielsweise die obere, linke Bildecke. Die Bildkoordinaten, die beispielsweise die Eckpunkte einer zweidimensionalen Bildmaske in dem jeweiligen Bild sind, werden in Weltkoordinaten umgewandelt. Weltkoordinaten sind Koordinaten in einem Welt-Koordinatensystem, das kartesische Koordinatenachsen hat, die sich auf die Zugmaschine 1 beziehen, also zur Zugmaschine 1 fest fixiert sind. Dieses Welt-Koordinatensystem hat auch genau einen Ausgangspunkt, nämlich den zuvor erwähnten Bezugspunkt an der Zugmaschine 1. Wird nun die Position und/oder Neigung der Kamera 8 relativ zur Zugmaschine 1 geändert, kann diese Änderung auch in die Weltkoordinaten eingerechnet werden, da diese ebenfalls auf die Zugmaschine 1 bezogen sind.

Die angepassten Weltkoordinaten können dann von der Bildverarbeitungseinheit 7 wieder in neue Bildkoordinaten umgewandelt werden, die dann wieder beispielsweise den Eckpunkten der Bildmaske B entsprechen. Die Bildmaske B in dem neuen Bild deckt nun wieder den Bildbereich A, der bei der Bildverarbeitung nicht berücksichtigt werden soll, optimal ab, obwohl sich der Bildbereich A gegenüber dem vorhergehenden Bild geändert hat.

Darüber hinaus ist hier und vorzugsweise vorgesehen, dass die Bildverarbeitungseinheit 7 basierend auf den jeweiligen Weltkoordinaten eine virtuelle, maschinenbezogene Maske B erzeugt, vorzugsweise, dass die virtuelle, maschinenbezogene Maske B und/oder die Weltkoordinaten jeweils gespeichert werden oder basierend auf der in der Regelungseinrichtung 5 abgelegten und/oder von der Regelungseinrichtung 5 berechneten Position und/oder Neigung der Kamera 8 relativ zur Zugmaschine 1 und basierend auf den in der Regelungseinrichtung 5 abgelegten Abmessungen der Zugmaschine 1 und/oder des landwirtschaftlichen Arbeitsaggregats 2 automatisch ermittelt werden.

Da jeder Bildkoordinate der jeweiligen Bildmaske B eine Weltkoordinate zugeordnet ist, kann aus den Weltkoordinaten auch eine entsprechende, virtuelle, maschinenbezogene Maske erzeugt werden. Die Weltkoordinaten bzw. die virtuelle Maske kann auch gespeichert werden. Dies ist insbesondere dann sinnvoll, wenn der Bediener in einer Ausgangsstellung des landwirtschaftlichen Arbeitsaggregats 2 relativ zur Zugmaschine 1 erstmalig eine Bildmaske B in dem von der Kamera 8 entsprechend erzeugten Bild einrichtet. Auf die dieser Bildmaske B entsprechende virtuelle Maske kann die Bildverarbeitungseinheit 7 dann im Bedarfsfall immer zurückgreifen, ohne dass der Bediener dazu neue Eingaben machen muss.

### Bezugszeichenliste

- 1: Zugmaschine
- 2: Arbeitsaggregat
- 3: Traktor
- 4: Fahrerassistenzsystem
- 5: Regelungseinrichtung
- 6: Kameraanordnung
- 7: Bildverarbeitungseinheit
- 8: Kamera
- 9: Pflanzenreihen
- 10: Bodenabschnitte
- A: Bildbereich
- B: Bildmaske

## Patentansprüche

1. Landwirtschaftliche Arbeitsmaschine mit einer Zugmaschine (1), insbesondere einem Traktor (3), mit mindestens einem landwirtschaftlichen Arbeitsaggregat (2) zur Bearbeitung eines Feldbestands umfassend eine Vielzahl von Nutzpflanzen, und mit einer Regelungseinrichtung (5),
wobei die Regelungseinrichtung (5) eine Kameraanordnung (6) mit mindestens einer Kamera (8), insbesondere 3D-Kamera, aufweist, die dazu eingerichtet ist, mittels der Kamera (8) Bilder von dem Feldbestand zu erzeugen,
wobei die Regelungseinrichtung (5) eine Bildverarbeitungseinheit (7) aufweist, die dazu eingerichtet ist, durch eine Bildverarbeitung basierend auf den erzeugten Bildern Lageinformationen über die Lage von Pflanzenreihen (9) und/oder zu bearbeitenden Bodenabschnitten (10) zu generieren, wobei die Lageinformationen Informationen über die Breite der Pflanzenreihen (9) bzw. der Bodenabschnitte (10) umfassen,
wobei die Regelungseinrichtung (5) dazu eingerichtet ist, basierend auf den generierten Informationen über die Breite der Pflanzenreihen (9) bzw. der Bodenabschnitte (10) die Querposition des landwirtschaftlichen Arbeitsaggregats (2) anzupassen,
wobei die Bildverarbeitungseinheit (7) dazu eingerichtet ist, in den erzeugten Bildern Bildbereiche (A), die bei der Bildverarbeitung unberücksichtigt bleiben sollen, dynamisch und/oder statisch auszublenden,
wobei dynamisch ausblenden bedeutet, dass die Bildverarbeitungseinheit (7) in der Lage ist, die besagten Bildbereiche (A), die unberücksichtigt bleiben sollen, für jedes mit der Kamera (8) erzeugte Bild neu festzulegen.

2. Landwirtschaftliche Arbeitsmaschine nach Anspruch 1, **dadurch gekennzeichnet, dass** die Bildverarbeitungseinheit (7) dazu eingerichtet ist, als einen Bildbereich (A), der bei der Bildverarbeitung unberücksichtigt bleiben soll, einen einen Teil der Zugmaschine (1) abbildenden Bildbereich (A) und/oder einen einen Teil des landwirtschaftlichen Arbeitsaggregats (2) abbildenden Bildbereich (A) und/oder einen ein bodenfestes Objekt abbildenden Bildbereich (A) auszublenden.

3. Landwirtschaftliche Arbeitsmaschine nach Anspruch 1 oder 2, **dadurch gekennzeichnet, dass** die Bildverarbeitungseinheit (7) zum Ausblenden des jeweiligen Bildbereichs (A), der bei der Bildverarbeitung unberücksichtigt bleiben soll, dazu eingerichtet ist, eine Bildmaske (B) im jeweiligen Bild zu erzeugen, die den Bildbereich (A) abdeckt, vorzugsweise, dass die Bildmaske (B) eine zweidimensionale Maske, die eine Fläche im Bild abdeckt, oder eine dreidimensionale Maske, die ein Volumen im Bild abdeckt, ist, weiter vorzugsweise, dass die Bildmaske (B) von Polygonen und/oder Pixeln gebildet wird.

4. Landwirtschaftliche Arbeitsmaschine nach einem der vorhergehenden Ansprüche, **dadurch gekennzeichnet, dass** der jeweilige von der Bildmaske (B) abgedeckte Bereich durch Bildkoordinaten in dem jeweiligen Bild definiert ist, dass die Bildverarbeitungseinheit (7) dazu eingerichtet ist,
die Bildkoordinaten der jeweiligen Bildmaske (B) basierend auf der in der Regelungseinrichtung (5) abgelegten und/oder von der Regelungseinrichtung (5) berechneten Position und/oder Neigung der Kamera (8) relativ zur Zugmaschine (1) in Weltkoordinaten umzuwandeln,
dass die Bildverarbeitungseinheit (7) dazu eingerichtet ist, dann, nach einer Änderung der Position und/oder Neigung der Kamera (8) relativ zur Zugmaschine (1) gegenüber der vorhergehenden Position und/oder Neigung der Kamera (8), die Weltkoordinaten entsprechend anzupassen und
dass die Bildverarbeitungseinheit (7) dazu eingerichtet ist, die angepassten Weltkoordinaten in neue Bildkoordinaten umzuwandeln und in dem von der Kamera (8) in ihrer neuen Position und/oder Neigung erzeugten neuen Bild der von der Bildmaske (B) abgedeckte Bereich den neuen Bildkoordinaten entsprechend abgedeckt wird.

5. Landwirtschaftliche Arbeitsmaschine nach einem der vorhergehenden Ansprüche, **dadurch gekennzeichnet, dass** die Bildverarbeitungseinheit (7) dazu eingerichtet ist, basierend auf den jeweiligen Weltkoordinaten eine virtuelle, maschinenbezogene Maske (B) zu erzeugen, vorzugsweise, dass die virtuelle, maschinenbezogene Maske (B) und/oder die Weltkoordinaten jeweils gespeichert werden oder basierend auf der in der Regelungseinrichtung (5) abgelegten und/oder von der Regelungseinrichtung (5) berechneten Position und/oder Neigung der Kamera (8) relativ zur Zugmaschine (1) und basierend auf den in der Regelungseinrichtung (5) abgelegten Abmessungen der Zugmaschine (1) und/oder des landwirtschaftlichen Arbeitsaggregats (2) automatisch ermittelt werden.

## Claims

1. An agricultural working machine with a towing vehicle (1), in particular a tractor (3), with at least one agricultural working assembly (2) for processing a field crop comprising a plurality of crop plants, and with a regulating device (5),
wherein the regulating device (5) has a camera system (6) with at least one camera (8), in particular a 3D camera, which is configured to produce images of the field crop by means of the camera (8),
wherein the regulating device (5) has an image processing unit (7) which is configured to generate situational information regarding the situation of rows of plants (9) and/or sections of ground (10) to be processed by means of image processing on the basis of the images produced, wherein the situational information comprises information regarding the width of the rows of plants (9) or of the sections of ground (10),
wherein the regulating device (5) is configured to adjust the transverse position of the agricultural working assembly (2) on the basis of the generated information regarding the width of the rows of plants (9) or of the sections of ground (10),
wherein the image processing unit (7) is configured to dynamically and/or statically hide image areas (A) in the produced images which are not to be considered during the image processing,
wherein "dynamically hide" means that the image processing unit (7) is capable of freshly determining the said image areas (A) which are not to be considered for each image produced with the camera (8).

2. The agricultural working machine according to claim 1, **characterized in that** the image processing unit (7) is configured to hide an image area (A) depicting a portion of the towing machine (1) and/or an image area (A) depicting a portion of the agricultural working assembly (2) and/or an image area (A) depicting a ground-fixed object as an image area (A) which is not to be considered during the image processing.

3. The agricultural working machine according to claim 1 or claim 2, **characterized in that**, in order to hide the respective image area (A) which is not to be considered during the image processing, the image processing unit (7) is configured to produce an image mask (B) in the respective image which covers the image area (A), preferably **in that** the image mask (B) is a two-dimensional mask which covers an area in the image, or a three-dimensional mask which covers a volume in the image, more preferably **in that** the image mask (B) is formed from polygons and/or pixels.

4. The agricultural working machine according to one of the preceding claims, **characterized in that** the respective area covered by the image mask (B) is defined by image coordinates in the respective image,
**in that** the image processing unit (7) is configured to convert the image coordinates for the respective image mask (B) into global coordinates on the basis of the position and/or inclination of the camera (8) relative to the towing machine (1) stored in the regulating device (5) and/or calculated by the regulating device (5),
**in that** the image processing unit (7) is configured to then appropriately adjust the global coordinates after a change in the position and/or inclination of the camera (8) relative to the towing machine (1) compared with the previous position and/or inclination of the camera (8), and
**in that** the image processing unit (7) is configured to convert the adjusted global coordinates into new image coordinates and to appropriately cover the area of the new image coordinates covered by the image mask (B) in the new image produced by the camera (8) in its new position and/or inclination.

5. The agricultural working machine according to one of the preceding claims, **characterized in that** the image processing unit (7) is configured to produce a virtual, machine-related mask (B) on the basis of the respective global coordinates, preferably **in that** the virtual, machine-related mask (B) and/or the global coordinates are respectively stored or are automatically determined on the basis of the position and/or inclination of the camera (8) relative to the towing machine (1) stored in the regulating device (5) and/or calculated by the regulating device (5) and on the basis of the dimensions of the towing machine (1) and/or of the agricultural working assembly (2) stored in the regulating device (5).

## Revendications

1. Machine de travail agricole comprenant un engin de traction (1), notamment un tracteur (3), doté d'au moins un équipement de travail agricole (2) destiné à travailler les cultures d'un champ comportant une multitude de plantes utiles, et comprenant un dispositif de régulation (5),
le dispositif de régulation (5) présentant un système de caméra (6) avec au moins une caméra (8), notamment une caméra 3D, qui est conçu pour produire des images des cultures du champ à l'aide de la caméra (8),
le dispositif de régulation (5) présentant une unité de traitement d'images (7) qui est conçue pour générer des informations de position concernant la position de rangées de plantes (9) et/ou de portions de sol (10) à travailler, par un traitement d'images sur la base des images produites, les informations de position contenant des informations sur la largeur des rangées de plantes (9) ou des portions de sol (10),
le dispositif de régulation (5) étant conçu pour adapter la position transversale de l'équipement de travail agricole (2), sur la base des informations générées concernant la largeur des rangées de plantes (9) ou des portions de sol (10),
l'unité de traitement d'images (7) étant conçue pour masquer de façon dynamique et/ou statique, dans les images produites, des zones d'image (A) qui ne doivent pas être prises en compte lors du traitement des images,
sachant que « masquer de façon dynamique » signifie que l'unité de traitement d'images (7) est en mesure de redéfinir pour chaque image produite par la caméra (8), lesdites zones d'image (A) ne devant pas être prises en compte.

2. Machine de travail agricole selon la revendication 1, **caractérisée en ce que** l'unité de traitement d'images (7) est conçue pour masquer en tant que zone d'image (A) ne devant pas être prise en compte lors du traitement d'image, une zone d'image (A) reproduisant une partie de l'engin de traction (1) et/ou une zone d'image (A) reproduisant une partie de l'équipement de travail agricole (2) et/ou une zone d'image (A) reproduisant un objet fixe au sol.

3. Machine de travail agricole selon la revendication 1 ou 2, **caractérisée en ce que**, pour masquer la zone d'image (A) respective ne devant pas être prise en compte lors du traitement d'image, l'unité de traitement d'images (7) est conçue pour générer, dans l'image respective, un masque d'image (B) qui recouvre la zone d'image (A), de préférence **en ce que** le masque d'image (B) est un masque en deux dimensions, qui recouvre une surface dans l'image, ou un masque en trois dimensions qui recouvre un volume dans l'image, en outre, de préférence, **en ce que** le masque d'image (B) est constitué de polygones et/ou de pixels.

4. Machine de travail agricole selon une des revendications précédentes, **caractérisée en ce que** la zone respective recouverte par le masque d'image (B) est définie par des coordonnées d'image dans l'image respective,
**en ce que** l'unité de traitement d'images (7) est conçue pour convertir les coordonnées d'image du masque d'image (B) respectif en coordonnées universelles, sur la base de la position et/ou de l'inclinaison de la caméra (8) vis-à-vis de à l'engin de traction (1) enregistrées dans le dispositif de régulation (5) et/ou calculées par le dispositif de régulation (5),
**en ce que** l'unité de traitement d'images (7) est conçue pour adapter les coordonnées universelles en conséquence après un changement de la position et/ou de l'inclinaison de la caméra (8) vis-à-vis de l'engin de traction (1), par rapport à la position et/ou l'inclinaison précédentes de la caméra (8), et
**en ce que** l'unité de traitement d'images (7) est conçue pour convertir les coordonnées universelles adaptées en de nouvelles coordonnées d'image, et que dans la nouvelle image produite par la caméra (8) dans sa nouvelle position et/ou inclinaison, la zone recouverte par le masque d'image (B) est recouverte en fonction des nouvelles coordonnées d'image.

5. Machine de travail agricole selon une des revendications précédentes, **caractérisée en ce que** l'unité de traitement d'images (7) est conçue pour générer un masque (B) virtuel en rapport avec la machine, sur la base des coordonnées universelles respectives, de préférence **en ce que** le masque (B) virtuel en rapport avec la machine et/ou les coordonnées universelles sont respectivement sauvegardés ou sont déterminés de manière automatique sur la base de la position et/ou de l'inclinaison de la caméra (8) vis-à-vis de l'engin de traction (1) enregistrées dans le dispositif de régulation (5) et/ou calculées par le dispositif de régulation (5), et sur la base des dimensions de l'engin de traction (1) et/ou de l'équipement de travail agricole (2) enregistrées dans le dispositif de régulation (5).
